# FASCICULE DE BREVET EUROPEEN

(11) **EP 2 318 236 B1**
(45) Date de publication et mention de la délivrance du brevet: **22.02.2012**
(21) Numéro de dépôt: 09740458.6
(22) Date de dépôt: 11.08.2009
(51) Int. Cl.: B60R 13/02, B60Q 3/00, B60Q 3/02, B60Q 3/04, B60K 35/00

(54) **PANNEAU DE GARNISSAGE DE VEHICULE AUTOMOBILE COMPRENANT UNE ZONE FORMANT PICTOGRAMME ANTI-REFLET ET VEHICULE AUTOMOBILE ASSOCIE**
KRAFTFAHRZEUGZIERBLECH MIT EINEM BLENDSCHUTZ-BILDZEICHENBEREICH UND ENTSPRECHENDES KRAFTFAHRZEUG
AUTOMOBILE ORNAMENT PANEL INCLUDING AN ANTI-GLARE ICON AREA, AND RELATED AUTOMOBILE

(30) Priorité: 29.08.2008 FR 0855822
(43) Date de publication de la demande: 11.05.2011
(73) Titulaire: Faurecia Interieur Industrie, 92000 Nanterre (FR)
(72) Inventeur: OEUVRARD, Jean-François, F-95300 Cergy Pontoise (FR); BEAU, Godefroy, F-92250 La Garenne Colombes (FR)
(74) Mandataire: Domenego, Bertrand
(86) Numéro de dépôt international: PCT/FR2009/051584
(87) Numéro de publication internationale: WO 2010/023392

(56) Documents cités:
- EP-A- 1 495 911
- EP-A- 1 839 945
- FR-A- 2 824 510
- FR-A- 2 872 953
- JP-A- 60 250 304
- US-A1- 2002 101 738

## Description

La présente invention concerne un panneau de garnissage du type comprenant au moins une zone formant pictogramme, ladite zone étant éclairée par une source de lumière disposée sous ledit panneau de garnissage, ledit panneau comprenant une peau souple translucide formant la surface externe du panneau de garnissage et une couche de support disposée contre la peau translucide, ladite couche présentant au moins une zone translucide en regard de la zone formant pictogramme. Le document FR-A1-2824510 décrit un tel panneau de garnissage.

L'invention concerne également un véhicule automobile comprenant un tel panneau de garnissage.

Il est connu de prévoir des panneaux de garnissage du type susmentionné permettant d'afficher des pictogrammes directement sur la peau de ces panneaux, lesdits pictogrammes indiquant certaines fonctions ou certains états du véhicule. De tels panneaux sont en particulier utilisés pour réaliser le garnissage de la planche de bord du véhicule automobile, disposée sous le pare-brise du véhicule.

Cependant, la lumière traversant le panneau de garnissage et débouchant dans la zone formant pictogramme est reflétée par le pare-brise, ce qui peut provoquer « un affichage » du pictogramme sur le pare-brise, particulièrement visible la nuit. Cette image du pictogramme sur le pare-brise occasionne une gêne pour le conducteur qui peut être perturbé par la lumière reflétée sur le pare-brise.

Pour pallier cet inconvénient, on peut prévoir de disposer les zones formant pictogramme à des endroits du panneau de garnissage où la réflexion de la lumière sur le pare-brise n'occasionnera pas de gêne pour le conducteur. Cependant, cette disposition particulière ne supprime pas la réflexion de la lumière sur le pare-brise et ne permet pas de choisir l'emplacement des pictogrammes indifféremment. Or, on cherche à afficher les pictogrammes à des emplacements où ils seront facilement visibles et identifiables pour le conducteur.

Une autre solution pour pallier cet inconvénient consiste à traiter de façon particulière le pare-brise pour réduire la réflexion de la lumière sur sa surface interne. Cependant, un tel traitement est particulièrement coûteux et complique la réalisation du pare-brise.

L'un des buts de l'invention est pallier les inconvénients susmentionnés en proposant un panneau de garnissage empêchant la réflexion ultérieure de la lumière le traversant de façon simple et peu coûteuse.

A cet effet, l'invention concerne un panneau de garnissage du type précité, dans lequel le panneau de garnissage comprend au moins un filtre polarisant disposé entre la source de lumière et la zone formant pictogramme de sorte à polariser la lumière illuminant la zone formant pictogramme et à empêcher sensiblement sa réflexion ultérieure.

La polarisation de la lumière avant qu'elle n'atteigne la zone formant pictogramme permet de réduire fortement, voire de supprimer, la réflexion ultérieure de cette lumière par exemple sur le pare-brise du véhicule.

Selon d'autres caractéristiques du panneau de garnissage :
- le filtre polarisant est un filtre à polarisation rectiligne ;
- la couche de support est une couche de mousse comprenant une ouverture en regard de la source de lumière, la zone translucide de la couche de support étant formée par un élément en gel transparent disposé dans ladite ouverture ;
- le filtre polarisant est disposé entre la source de lumière et ledit élément en gel ;
- l'élément en gel est disposé dans un élément de support transparent en forme de coupelle ;
- le filtre polarisant est disposé contre l'élément de support transparent sous celui-ci ;
- le panneau de garnissage comprend un masque comprenant des ouvertures laissant passer la lumière et des zones empêchant le passage de la lumière, lesdites ouvertures définissant la forme du pictogramme, ledit masque étant disposé entre la source de lumière et la zone formant pictogramme ; et
- le masque est imprimé sur le filtre polarisant.

L'invention concerne également un véhicule automobile comprenant un panneau de garnissage tel que décrit ci-dessus, ledit panneau de garnissage étant appliqué contre une partie de l'habitacle dudit véhicule.

Selon une autre caractéristique du véhicule, le panneau de garnissage est disposé sous le pare-brise dudit véhicule, le filtre polarisant empêchant sensiblement la réflexion de la lumière illuminant la zone formant pictogramme contre ledit pare-brise.

D'autres aspects et avantages de l'invention apparaîtront à la lecture de la description qui suit, donnée à titre d'exemple et faite en référence aux dessins annexés, dans lesquels :
- la Fig. 1 est une représentation schématique en coupe d'un panneau de garnissage selon l'art antérieur disposé sous un pare-brise,
- la Fig. 2 est une représentation schématique en coupe d'un panneau de garnissage selon l'invention disposé sous un pare-brise,
- la Fig. 3 est une représentation schématique en coupe d'un panneau de garnissage selon l'invention montrant en détail l'agencement de la zone formant pictogramme.

Dans la description, on entend par « externe » ce qui est visible depuis l'habitacle du véhicule automobile et par « interne » ce qui n'est pas visible. Les termes « supérieur » et « inférieur » sont définis par rapport à une direction partant de la paroi de l'habitacle et allant vers l'intérieur de l'habitacle.

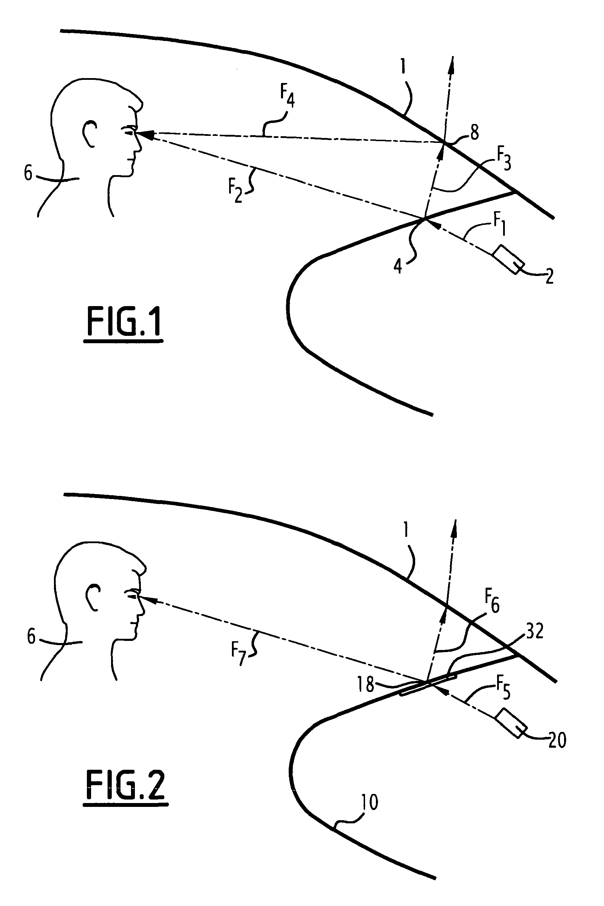

La Fig. 1 montre le trajet de la lumière dans un panneau de garnissage disposé sous un pare-brise 1 lorsque la lumière émise par une source de lumière 2 ne subit aucune modification et lorsque le pare-brise n'est pas traité pour empêcher la réflexion. La lumière émise par la source de lumière 2 traverse le panneau de garnissage et atteint une zone formant pictogramme 4, comme indiqué par la flèche F₁. La zone formant pictogramme est alors illuminée et visible par le conducteur 6, comme représenté par la flèche F₂. Cependant une composante de la lumière est atteint le pare-brise 1, comme représenté par la flèche F₃ et est reflétée par celui-ci, la zone 8 du pare-brise dans laquelle la lumière se reflète devient alors également visible par le conducteur 6, comme représenté par la flèche F₄, ce qui peut occasionner une gêne pour celui-ci, notamment la nuit.

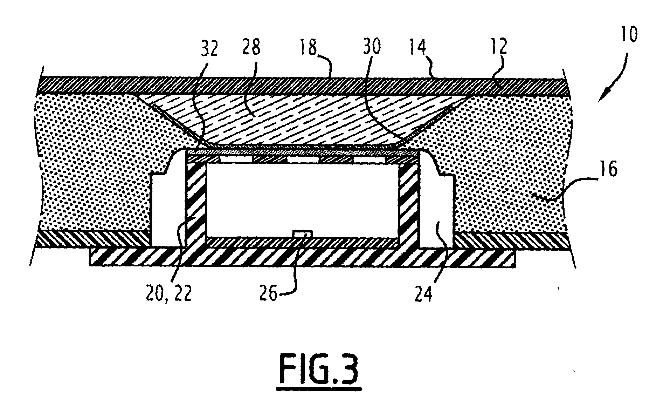

Pour pallier cet inconvénient, l'invention prévoit un panneau de garnissage 10 tel que représenté sur les Fig. 2 et 3.

Le panneau de garnissage 10 comprend une peau souple 12 translucide, c'est-à-dire laissant passer la lumière, et une couche de support 16 sous et contre la peau translucide 12. La peau 12 forme la face externe 14, visible depuis l'habitacle du véhicule automobile, du panneau 10. La couche de support 16 est par exemple réalisée en mousse afin de conférer un toucher souple au panneau de garnissage 10. Cet ensemble peut être conformé de la façon souhaitée pour s'adapter au garnissage d'un véhicule automobile. La surface externe 14 formée par la peau 12 est par exemple sensiblement plane ou présente des zones en saillie ou en creux, par exemple pour signaler la présence de boutons de commande de fonctions du véhicule sous l'ensemble peau 12 / couche de support 16.

La panneau de garnissage 10 comprend au moins une zone 18 formant pictogramme permettant d'afficher des informations rétro-éclairées sur la face externe 14 de la peau translucide 12. A cet effet, une source de lumière 20 est disposée sous la peau translucide 12 en regard de la zone formant pictogramme 18. Cette source de lumière 20 est par exemple une boîte à lumière 22 disposée dans une ouverture 24 de la couche de support 16. La boîte à lumière 22 est connue en soi et comprend par exemple une diode électroluminescente 26 agencée pour émettre de la lumière vers la zone formant pictogramme 18.

L'ouverture 24 est remplie par un élément en gel transparent 28 au-dessus de la boîte à lumière 22 de sorte à laisser passer la lumière entre la boîte à lumière et la zone formant pictogramme, comme indiqué par la flèche F₅ sur la Fig. 2. L'élément de gel 28 est par exemple réalisé en polyuréthane ou en silicone et est agencé pour ne pas modifier la lumière qui le traverse, c'est-à-dire qu'il n'a pas d'influence sur la polarisation de cette lumière. Il est par exemple coulé dans un élément de support 30 rigide en forme de coupelle réalisé en matériau plastique transparent. L'élément de support 30 est également agencé pour ne pas modifier la lumière qui le traverse. Selon un autre mode de réalisation, l'élément en gel 28 est un coussin de gel disposé directement dans l'ouverture 24 sur la boîte à lumière 22 et sous la peau 12. La surface supérieure de l'élément en gel 28 est disposée directement contre la peau 12.

Un filtre polarisant 32 est disposé entre la face supérieure de la boîte à lumière 22 et l'élément de gel 28, sous l'élément de support 30 ou directement sous le coussin de gel. Ce filtre 32 est agencé pour polariser la lumière provenant de source de lumière 20 avant qu'elle ne pénètre dans l'élément en gel 28. Le filtre 32 est par exemple à polarisation rectiligne. Le choix de la polarisation dépend de l'architecture du véhicule automobile et de l'endroit où le panneau de garnissage de l'invention est disposé dans le véhicule. Pour une planche de bord, le filtre polarisant sera par exemple à polarisation horizontale pour un affichage situé sur la planche de bord afin de diminuer l'intensité lumineuse qui se reflète sur le pare-brise en suivant un chemin optique dans le plan vertical. Pour un panneau de garnissage disposé sur un panneau de porte, le filtre sera par exemple à polarisation oblique. La polarisation est définie en fonction du plan contenant le chemin optique emprunté par le rayon lumineux depuis la zone d'affichage jusqu'à l'oeil du conducteur, via un point de réflexion sur un vitrage du véhicule.

La lumière traversant le panneau de garnissage 10 est ainsi polarisée de sorte que la lumière se dirigeant vers le pare-brise 1, comme représentée par la flèche F₆ sur la Fig. 2, ne soit sensiblement pas reflétée par celui-ci. Le pictogramme n'est ainsi visible du conducteur 6 que depuis la zone formant pictogramme 18, comme représenté par la flèche F₇ sur la Fig. 2. Ainsi le conducteur 6 n'est pas gêné par le reflet du pictogramme dans le pare-brise 1, en particulier la nuit.

La position du filtre polarisant 32 sous l'élément en gel 28 permet de conserver le toucher souple du panneau de garnissage 10, mais une autre position de ce filtre sous la peau souple 12 pourrait être envisagée.

Pour définir la forme du pictogramme, on prévoit un masque disposé dans le trajet de la lumière entre la source de lumière 20 et la zone formant pictogramme 18, comprenant des ouvertures laissant passer la lumière et des zones bloquant le passage de la lumière. Ce masque peut être un élément indépendant ou être imprimé sur un des éléments du panneau de garnissage. Selon un mode de réalisation, le masque est imprimé sur le filtre polarisant 32, ce qui permet de réaliser des économies dans la fabrication du panneau de garnissage 10.

Le panneau de garnissage 10 décrit ci-dessus permet de réduire fortement les réflexions du pictogramme sur le pare-brise. On obtient par exemple une réduction de 90% de la réflexion, les 10% restant étant provoqués par la dépolarisation de la lumière lorsqu'elle traverse la peau translucide 12. Cependant, une telle réflexion n'est pas susceptible de provoquer une gêne pour le conducteur 6. On obtient ainsi une zone formant pictogramme rétro-éclairée et anti-reflet.

D'autres variantes de l'invention peuvent être envisagées. Ainsi, la boîte à lumière 22 peut être surmoulée par une mousse translucide, ce qui permet de se passer d'un élément en gel 28 dans l'ouverture 24, le filtre polarisant 32 étant disposé entre la boîte à lumière 22 et la mousse translucide. Cependant, cette mousse translucide est susceptible de provoquer une dépolarisation supplémentaire de la lumière provenant de la boîte à lumière 22, ce qui peut réduire les performances du panneau de garnissage 10 quant à la réflexion de la lumière dans le pare-brise.

## Revendications

1. Panneau de garnissage (10) de véhicule automobile comprenant au moins une zone formant pictogramme (18), ladite zone étant éclairée par une source de lumière (20) disposée sous ledit panneau de garnissage, ledit panneau comprenant une peau souple translucide (12) formant la surface externe (14) du panneau de garnissage et une couche de support (16) disposée contre la peau translucide (12), ladite couche (16) présentant au moins une zone translucide en regard de la zone formant pictogramme (18), **caractérisé en ce que** le panneau de garnissage comprend au moins un filtre polarisant (32) disposé entre la source de lumière (20) et la zone formant pictogramme (18) de sorte à polariser la lumière illuminant la zone formant pictogramme (18) et à empêcher sensiblement sa réflexion ultérieure.

2. Panneau de garnissage selon la revendication 1, **caractérisé en ce que** le filtre polarisant (32) est un filtre à polarisation rectiligne.

3. Panneau de garnissage selon la revendication 1 ou 2, **caractérisé en ce que** la couche de support (16) est une couche de mousse comprenant une ouverture (24) en regard de la source de lumière (20), la zone translucide de la couche de support étant formée par un élément en gel (28) transparent disposé dans ladite ouverture (24).

4. Panneau de garnissage selon la revendication 3, **caractérisé en ce que** le filtre polarisant (32) est disposé entre la source de lumière (20) et ledit élément en gel (28).

5. Panneau de garnissage selon la revendication 3 ou 4, **caractérisé en ce que** l'élément en gel (28) est disposé dans un élément de support (30) transparent en forme de coupelle.

6. Panneau de garnissage selon la revendication 5, **caractérisé en ce que** le filtre polarisant (32) est disposé contre j'élément de support transparent (30) sous celui-ci.

7. Panneau de garnissage selon l'une quelconque des revendications 1 à 6, **caractérisé en ce qu'**il comprend un masque comprenant des ouvertures laissant passer la lumière et des zones empêchant le passage de la lumière, lesdites ouvertures définissant la forme du pictogramme, ledit masque étant disposé entre la source de lumière (20) et la zone formant pictogramme (18).

8. Panneau de garnissage selon la revendication 7, **caractérisé en ce que** le masque est imprimé sur le filtre polarisant (32).

9. Véhicule automobile comprenant un panneau de garnissage (10) selon l'une quelconque des revendications 1 à 8, ledit panneau de garnissage (10) étant appliqué contre une partie de l'habitacle dudit véhicule.

10. Véhicule automobile selon la revendication 9, **caractérisé en ce que** le panneau de garnissage (10) est disposé sous le pare-brise (1) dudit véhicule, le filtre polarisant (32) empêchant sensiblement la réflexion de la lumière illuminant la zone formant pictogramme (18) contre ledit pare-brise (1).

## Claims

1. An trim panel (10) for a motor vehicle comprising at least one pictogram area (18), said area being illuminated by a light source (20) placed under said trim panel, said trim panel including a flexible translucent skin (12) forming the outer surface (14) of the trim panel, and a backing layer (16) placed against the translucent skin (12), said layer (16) having at least one translucent area opposite the pictogram area (18), **characterized in that** the trim panel comprises at least one polarizing filter (32) positioned between the light source (20) and the pictogram area (18) so as to polarize the light illuminating the pictogram area (18) and substantially prevent its later reflection.

2. The trim panel according to claim 1, **characterized in that** the polarizing filter (32) is a rectilinear polarizing filter.

3. The trim panel according to claim 1 or 2, **characterized in that** the backing layer (16) is a layer of foam comprising an opening (24) opposite the light source (20), the translucent area of the backing layer being formed by a transparent gel element (28) arranged in said opening (24).

4. The trim panel according to claim 3, **characterized in that** the polarizing filter (32) is positioned between the light source (20) and said gel element (28).

5. The trim panel according to claim 3 or 4, **characterized in that** the gel element (28) is positioned in a bowl-shaped transparent backing element (30).

6. The trim panel according to claim 5, **characterized in that** the polarizing filter (32) is positioned against the transparent backing element (30), under it.

7. The trim panel according to any one of claims 1 to 6, **characterized in that** it comprises a mask comprising openings allowing light to pass and areas preventing the passage of the light, said openings defining the shape of the pictogram, said mask being positioned between the light source (20) and the pictogram area (18).

8. The trim panel according to claim 7, **characterized in that** the mask is printed on the polarizing filter (32).

9. A motor vehicle comprising an trim panel (10) according to any one of claims 1 to 8, said trim panel (10) being applied against part of the passenger compartment of said vehicle.

10. The motor vehicle according to claim 9, **characterized in that** the trim panel (10) is positioned under the windshield (1) of said vehicle, the polarizing filter (32) substantially preventing the reflection of the light illuminating the pictogram area (18) against said windshield (1).

## Patentansprüche

1. Verkleidungsplatte (10) für Kraftfahrzeug, die wenigstens eine ein Piktogramm (18) bildende Zone aufweist, wobei die Zone durch eine Lichtquelle (20) beleuchtet wird, die unter der Verkleidungsplatte angeordnet ist, wobei die Platte eine lichtdurchlässige, elastische Haut (12), die die äußere Oberfläche (14) der Verkleidungsplatte bildet, und eine Trägerschicht (16), die an der lichtdurchlässigen Haut (12) angeordnet ist, aufweist, wobei die Schicht (16) wenigstens eine lichtdurchlässige Zone gegenüber der das Piktogramm (18) bildenden Zone aufweist, **dadurch gekennzeichnet, dass** die Verkleidungsplatte wenigstens einen Polarisationsfilter (32) umfasst, der zwischen der Lichtquelle (20) und der das Piktogramm (18) bildenden Zone angeordnet ist, derart, dass das Licht, das die das Piktogramm (18) bildende Zone beleuchtet, polarisiert wird und seine anschließende Reflexion im Wesentlichen verhindert wird.

2. Verkleidungsplatte nach Anspruch 1, **dadurch gekennzeichnet, dass** der Polarisationsfilter (32) ein Filter mit linearer Polarisation ist.

3. Verkleidungsplatte nach Anspruch 1 oder 2, **dadurch gekennzeichnet, dass** die Trägerschicht (16) eine Schaumstoffschicht ist, die eine Öffnung (24) gegenüber der Lichtquelle (20) aufweist, wobei die lichtdurchlässige Zone der Trägerschicht durch ein Element (28) aus einem transparenten Gel gebildet ist, das in der Öffnung (24) angeordnet ist.

4. Verkleidungsplatte nach Anspruch 3, **dadurch gekennzeichnet, dass** der Polarisationsfilter (32) zwischen der Lichtquelle (20) und dem Gel-Element (28) angeordnet ist.

5. Verkleidungsplatte nach Anspruch 3 oder 4, **dadurch gekennzeichnet, dass** das Gel-Element (28) in einem transparenten Tragelement (30) in Napfform angeordnet ist.

6. Verkleidungsplatte nach Anspruch 5, **dadurch gekennzeichnet, dass** der Polarisationsfilter (32) an dem transparenten Tragelement (30) unter diesem angeordnet ist.

7. Verkleidungsplatte nach einem der Ansprüche 1 bis 6, **dadurch gekennzeichnet, dass** sie eine Maske umfasst, die Öffnungen, die das Licht durchlassen, und Zonen, die den Durchgang des Lichts verhindern, enthält, wobei die Öffnungen die Form des Piktogramms definieren, wobei die Maske zwischen der Lichtquelle (20) und der das Piktogramm (18) bildenden Zone angeordnet ist.

8. Verkleidungsplatte nach Anspruch 7, **dadurch gekennzeichnet, dass** die Maske auf den Polarisationsfilter (32) gedruckt ist.

9. Kraftfahrzeug, das eine Verkleidungsplatte (10) nach einem der Ansprüche 1 bis 8 umfasst, wobei die Verkleidungsplatte (10) an einem Teil des Fahrgastraums des Fahrzeugs angebracht ist.

10. Kraftfahrzeug nach Anspruch 9, **dadurch gekennzeichnet, dass** die Verkleidungsplatte (10) unter der Windschutzscheibe (1) des Fahrzeugs angeordnet ist, wobei der Polarisationsfilter (32) die Reflexion des Lichts, das die das Piktogramm (18) bildende Zone beleuchtet, zu der Windschutzscheibe (1) im Wesentlichen verhindert.
